# EUROPÄISCHE PATENTANMELDUNG

(11) **EP 2 281 712 A2**
(43) Veröffentlichungstag der Anmeldung: **09.02.2011**
(21) Anmeldenummer: 10162014.4
(22) Anmeldetag: 05.05.2010
(51) Int. Cl.: B60M 5/00, H02G 9/04, E01B 2/00, E02D 29/12

(54) **Mobiles Haltesystem für Kabeltröge**

(30) Priorität: 03.08.2009 DE 102009036470
(71) Anmelder: UPZ Logistik & Consulting GmbH, 06769 Brehna (DE)
(72) Erfinder: Zeranski, Peter, 06188, Landsberg (DE)
(74) Vertreter: Gulde Hengelhaupt Ziebig & Schneider

(57) **Zusammenfassung**

Die Erfindung betrifft ein mobiles Haltesystem für Kabeltröge, wobei letztere während grundhafter Gleiserneuerungen die üblicherweise parallel zum Gleis verlegten Fernmeide- und Signalkabel oder andere aufnehmen und dadurch vor mechanischen und elektrischen Beschädigungen weitestgehend schützen. Gemäß der Erfindung wird von einem Schienenfuß (2) einer Schiene (1), ausgehend von einer Schienenklemme (3), ein Aufsteckrohr (4) in einer Führung gleitend und in definierter Länge fixierbar mit einer Stützenführung (12) über ein Basisprofil (11) fest verbunden, wobei vor der Stützenführung (12) sich paarweise und zueinander beabstandete Spannböcke (9, 16) mit ihnen zugeordneten Wideriagern (6) gegenüberstehen und die Spannböcke (9, 16) sowie die Widerlager (6) mit Auflageprofilen (7) verbunden sind, die am Basisprofil (11) und dem Aufsteckrohr (4) befestigt sind, dabei zwischen den paarweise nebeneinander stehenden Spannböcken (9, 16) mit den Widerlagern (6), Tragprofile (5) verspannt und auf letzteren Kabeltröge 14 verschraubt sind.

## Beschreibung

Die Erfindung betrifft ein mobiles Haltesystem für Kabeltröge, wobei letztere während grundhafter Gleiserneuerungen die üblicherweise parallel zum Gleis verlegten Fernmelde- und Signalkabel oder andere aufnehmen und dadurch vor mechanischen und elektrischen Beschädigungen weitestgehend schützen. Die vorhandenen Kabel befinden sich damit außerhalb eines neu zu stopfenden Gleisbettes und das Haltesystem nutzt dabei unter anderem eine temporär angelegte formschlüssige Verbindung zum Schienenfuß einer vorhandenen Schiene eines Gleises.

In der Regel sind Kabel nach abgeschlossenen Gleisbauarbeiten in Kabelschächten beziehungsweise -trögen neben oder unter beziehungsweise zwischen den Gleisen stationär verlegt. Die Baulichkeiten sind dabei monolithisch oder in Ortbetonbauwiese ausgeführt, wobei bis zu einer definierten Größe auch Betonfertigteile verwendet werden. Während einer Bauphase an Gleisen, Gleisanlagen werden diese meist ebenfalls den neuen Bedingungen der Nachrichtenkommunikation angepasst und müssen zuvor in ihrer alten Ausführung abgerissen werden. Sie stehen bei einer grundhaften Gleiserneuerung also nicht mehr zum Schutz vorhandener Kabel zur Verfügung.

Nachfolgend soll auf bekannte Lösungen des Standes der Technik zur Kabelaufnahme an Gleisanlagen näher eingegangen werden.

So gibt es nach DE 10131600 A1 einen Kabeltrog, der insbesondere parallel zu Gleisanlagen von Eisenbahnen verlegt wird. Der Kabeltrog hat keine unmittelbare Verbindung zu einem Schienenstrang und er ist im Schotterbett eingebaut. Dadurch, dass er aus einem handhabbaren Unterteil und einem Deckel besteht kann er schnell aus dem Baubereich eines Gleises entfernt werden, was aber wieder freiliegende Kabel während des Gleisbaus bedingt, so dass diese Beschädigungen ausgesetzt sind.

In DE 3447836 A1 wird ein Kabeltrog für Gleisanlagen vorgestellt. Er weist u-förmige Trogelemente und einen Deckel auf, wobei unterhalb des Troges Metallstützen angebracht sind, die den Trog oberirdisch und parallel zum Gleis halten. Die Tröge werden an ihren Stößen miteinander verbunden und sie besitzen Öffnungen zur Belüftung und zum Ablauf von Niederschlagswasser. Aufgrund der Konzeption könnte eine derartige Ausbildung auch geeignet sein, Kabelführungen während einer Gleiserneuerung weitestgehend zu schützen.

Allerdings können Baumaschinen seitlich nur unter besonderer Vorsicht das Schotterbett herrichten.

Mit DE 2145817 ist ein Kabelschacht für den Gleisbereich von Eisenbahnanlagen aus vorgefertigten Betonteilen bekannt. Hier werden Schächte mit lichten Innendurchmessern von 1,50 m x 2,00 m zwischen und unter den Gleisen aus Betonfertigteilen bestehend, eingebaut, um größere Kabeldurchmesser, die größere Biegeradien bedingen, verlegen zu können.

Der Kabelschacht ist demnach nur für den grundhaften Ausbau eines oder mehrerer Schienenwege geeignet und stellt keine Interimslösung während "nur" eines Gleiserneuerungsprozesses dar.

Nach DE 298 05 653 U1 wird eine Einrichtung zum Aufständern von Kunststoff-Kabeltrögen im Nahbereich elektrifizierter Bahnstrecken gezeigt. Hier befinden sich profilierte Leitplankenbleche, die allgemein im Straßenbau Verwendung finden, mit Aufliegern, die ein nach oben offenes U-Profil mit nach außen aufgeweiteten Schenkeln besitzen, in stabiler, formschlüssiger Verbindung. Diese Konstruktion ist mit senkrechten, im Erdboden verankerten, Stützen verbunden. Auf die horizontalen Joche der profilierten Leitplankenbleche ruhen die, hier insbesondere aus Kunststoff bestehenden, Kabeltröge.

Eine weitere Lösung zur Lagerung von Kabeltrögen in einem Kabeltrogkanal ist gemäß DE 295 10 620 U1 bekannt. Der Trog besteht aus einem U-Profil, das von oben mittels eines an den Rändern speziell profilierten Deckels mit den Außenwänden des Troges in Formschluss tritt. Ein derartiger Trog wird durch einen U-förmigen Verbinder gehalten, wobei letzterer auf einer im Erdboden verankerten Unterkonstruktion, bestehend aus einem Querverbinder und einer Stütze, gelagert ist.

Nachteilig ist auch, wie in der vorhergenannten Lösung, dass Fundamente vor Ort für die Stützen angelegt werden müssen und damit die mobile Wiederverwendbarkeit der Einrichtungen eingeschränkt ist.

Schließlich bietet die Lösung nach DE 196 51 017 C1 einen aufgeständerten Kabelkanal an, der eine Kunststoffwanne mit einer Randgestaltung aufweist, wobei die Randgestaltung horizontale Rohre erfasst. Die in Rechteckform ausgebildeten Stahlrohre ruhen auf einer Vertikalstütze oberhalb des Bodens. Nach Vormontage der genannten Rohre auf der Vertikalstütze / den Vertikalstützen kann die Kunststoffwanne über diese Rohre gestülpt werden. Die angepasste Ausbildung eines Deckels schließt die Kunststoffwanne nach oben ab.

Gemäß dieser Beispiele des zitierten Standes der Technik wird deutlich, dass es keine vorübergehende und sichere Möglichkeit gibt, Kabel u.a. der Signal- und Fernmeldetechnik während der Bauphase bei Gleiserneuerungen vor mechanischen und elektrischen Beschädigungen zu schützen, wobei der geschützte Aufbewahrungsort aus dem Gleisbett genommen ist.

Mit der Erfindung sollen die angesprochenen Nachteile überwunden werden.

Aufgabe der Erfindung ist es somit, über eine Schienenfußhalterung an einer Eisenbahnschiene und mittels einer Unterstützungskonstruktion als Auflage eines leichten Kabeltrogs, bestehend aus Betonfertigteilen oder metallischen Werkstoffen, ein mobiles Haltesystem für denselben zu schaffen, wobei seine Ausbildung eine unkomplizierte Montier- und Demontierbarkeit sowie eine mehrfache Wiederverwendbarkeit garantieren soll und es dabei in formschlüssiger Verbindung mit einem auf ihm in definierten Längen einzelner Segmente vorliegendem und aufbaubarem Kabeltrog steht, der oben offen oder geschlossen sein kann.

Die Aufgabe wird wie folgt gelöst, wobei hinsichtlich der erfinderischen Gedanken auf den Patentanspruch 1 verwiesen wird.

Die weitere Ausgestaltung der Erfindung ergibt sich aus den Patentansprüchen 2 bis 5.

Zur Erläuterung der Erfindung sollen weitere Hinweise folgen.

An einer im Gleisjoch befindlichen Schiene ist an deren Schienenfuß eine bekannte Schienenspannvorrichtung in Form einer der Breite des Schienenfußes anpassbare Schienenklemme formschlüssig angebracht. Von ihr führt ein Zwischenrohr horizontal vom Schienenfuß weg, das in ein Aufsteckrohr einschieb- und arretierbar eingeführt ist, wobei das Aufsteckrohr mit um 90° versetzten Auflageprofilen, die parallel zueinander beabstandet sind, fest verbunden ist. Das Aufsteckrohr mit den Auflageprofilen seinerseits ist mit einem parallel zu ihm verlaufenden Basisprofil derart fest verbunden, dass letzteres zwischen Aufsteckrohr und Auflageprofil gelegen, mit diesen mindestens je eine Anlagefläche zur Erhöhung der inneren Stabilität besitzt. Am jeweiligen Ende von, im vorliegendem Fall, zwei vorhandenen Auflageprofilen befinden sich paarweise und sich gegenüberstehende Spannböcke mit je einem Widerlager, so dass auf die Auflageprofile aufgelegte Tragprofile, insbesondere bestehend aus metallischen Vierkant-Hohlprofilen, auf diesen ruhen und jeweils in der Nähe ihrer aufeinander stoßenden Enden mittels gleichzeitig zweier nebeneinander liegender Spannböcke reversibel festgestellt sind. Das die vorgenannten Elemente tragende Basisrohr ist dabei mit mindestens einer nach außen verlegten Stütze fest verbunden, wobei diese als Führung für eine Bodenabstützung fungiert, die Biegemomente gegenüber der Schienenklemme bei nicht horizontaler Ausrichtung des Systems vermeidet.

Auf die parallel geführten und fixierten Tragprofile wird ein insbesondere dünnwandiger Kabeltrog in U-Form, bestehend aus Beton oder metallischen Werkstoffen mit einer Länge unabhängig vom Schwellenabstand aufgelegt und über Bohrungen in seinem Boden, korrespondierend mit Bohrungen in den Tragprofilen, mittels eines Spannjoches, das im wesentlichen aus zwei Teilen besteht, fest verschraubt. Je nach Kabelfüllung pro Meter Traglänge (maximal 100 kg) kann vorgesehen werden, gegenüber der außen angelagerten Stütze und an den innenliegenden Spannböcken eine analog höhenverstellbare Stütze anzubringen.

Zur Verbesserung des Schwingungsverhaftens der Konstruktion bei Zugfahrten ist es sinnvoll, eine weitere Lage Tragprofile auf die vorhandenen zu legen und gemeinsam mit diesen zu verschrauben, wodurch das System an unterschiedliche Lastverhältnisse (Beladung mit Kabeln) über das Wirken von Resonanzfrequenz beziehungsweise Dämpfung anpassbar ist. Durch verlängernde Steckelemente, die in die Spannböcke eingebracht werden, können als Doppelung aufgelegte Trageprofile am Abgleiten nach außen gehindert werden, nach innen sind sie dabei durch die Schrauben des Spannjoches gesichert. Gemäß der Anordnung der im Haltesystem zueinander positionierten Elemente lässt eine Toleranz zwischen Spannbock und Widerlager eine gering verschwenkte Klemmung der Tragprofile zu, wodurch eine örtliche Veränderung des Abstandes oder der Höhe bezüglich der Gleise möglich ist. Die variable Aufständerung ermöglicht zudem die Anpassung an den Untergrund. Der Abstand von Schienenklemme zu Schienenklemme sollte etwa 3 Schwellenlücken, also 2,4 m betragen. Dabei zeigt sich ein weiterer Vorteil des Systems, denn die Kabeltröge sind 1 m lang und somit eigentlich nicht kompatibel mit dem Schwellenabstand. Die Klemmelemente (Spannbock und Widerlager) sind in der Höhe der niedrigsten Tragprofile ausgeführt, wodurch die Kabeltröge über den Klemmelementen stehen.

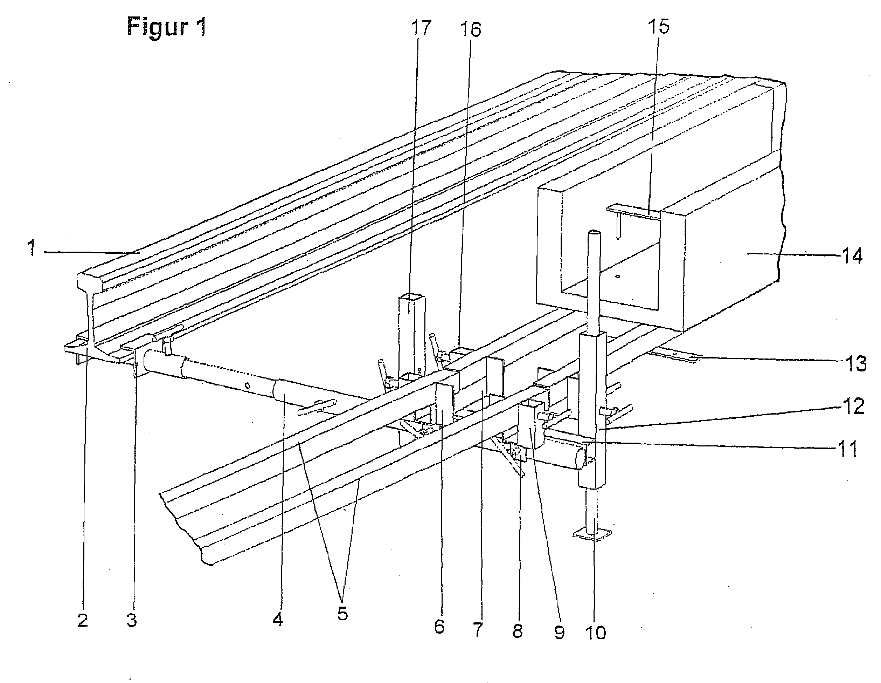

Die Erfindung soll nachfolgend anhand eines Ausführungsbeispiels näher erläutert werden. Dazu wird auf Figur 1 zurückgegriffen.
- Figur 1 zeigt:: perspektivische Gesamtdarstellung eines mobilen Haltesystems mit einer Aufständerung, die sich mehrfach wiederholt

Am Schienenfuß 2 einer Schiene 1 greift eine Schienenklemme 3 an, mit der über ein Aufsteckrohr 4 die erfindungsgemäße Unterstützungskonstruktion für in der Länge genormte Kabeltröge 14 in Verbindung steht. Die Unterstützungskonstruktion besteht aus mehreren Elementen, die miteinander verschraubt bzw. unlösbar fest miteinander verbunden sind. So ist am Aufsteckrohr 4 ein längs mit ihnen fest verbundenes Basisprofil 11 in Form eines Vierkanthohlprafils angeordnet, wobei über beide quer angeordnete, kurze Auflageprofile 7 fest angebracht sind, die parallel zueinander stehen. Die Auflageprofile 7 bilden einerseits die Unterlage für parallel zueinander geführte Tragprofile 5, die auch in mehrfacher Anordnung übereinander gelegt sein können, und andererseits die seitlichen Anlageflächen für die Spannböcke 9, 16 und deren Widerlager 6, zwischen denen die Tragprofile 5 verspannt sind. Die Verspannung erfolgt in der Weise, dass die aufeinander treffenden Stöße von den Tragprofilen 5 mittig - zwischen zwei benachbarten Spannböcken 9, 16 und deren Widerlager 6 positioniert sind, so dass dadurch auch begrenzt Abknickungen der ansonsten parallel geführten Tragprofile 5 und der darauf aufgebauten Kabeltröge 14 möglich sind. Die Kabeltröge 14 sind mittels oberer und unterer Spannjoche 13, 15 nebst Mitteln zur Verschraubung mit den Tragprofilen 5 verbunden.

Die seitliche Beabstandung des mobilen Haltesystems von der Schiene 1 kann über eine in seinen Grenzen gehaltene Teleskopierbarkeit zwischen der Schienenklemme 3 und dem Aufsteckrohr 4 über ein Zwischenstück und seine Höhenverstellbarkeit mittels einer Stützenführung 12 in Verbindung mit einer Abstützung 10 eingestellt werden.

In den Fällen einer höheren Kabellast in den Kabeltrögen 14 oder eines erforderlichen größeren Abstandes vom Gleisbett über die technisch sinnvolle Teleskopierbarkeit des Systems hinausgehend (seitliche Beabstandung) ist vorsehbar, dass eine Reservestütze 17 mit einer Abstützung 10 komplettiert ist und das mobile Haltesystem freisteht.

Zur Verbesserung des Schwingungsverhaltens des mobilen Haltesystems bei Zugdurchfahrten kann vorteilhaft vorgesehen werden, dass die parallel geführten und festgeklemmten Tragprofile 5 auch mehrfach, insbesondere doppelt, übereinander gelegt sind.

Die Vorteile der Erfindung können zusammenfassend darin gesehen werden:
- während der Bauphase an Gleisen sind die an ihnen in der Regel parallel geführten Signal-, Fernmelde- oder andere Kabel vor mechanischen und elektrischen Beschädigungen geschützt
- eine ständige Umverlegung entfällt
- Verbesserung des Arbeits- und Unfallschutzes
- Einsparung an Wiederherstellungskosten bezüglich beschädigter Kabel beim Gleisbau

### Bezugszeichenliste

- 1 -: Schiene
- 2 -: Schienenfuß
- 3 -: Schienenklemme
- 4 -: Aufsteckrohr
- 5 -: Tragprofil
- 6 -: Widerlager
- 7 -: Auflageprofil
- 8 -: Klemmlasche
- 9 -: Spannbock
- 10 -: Abstützung
- 11 -: Basisprofil
- 12 -: Stützenführung
- 13 -: Spannjoch, unten
- 14 -: Kabeltrog
- 15 -: Spannjoch, oben
- 16 -: Spannbock
- 17 -: Reservestütze

## Patentansprüche

1. Mobiles Haltesystem für Kabeltröge, die Signal-, Fernmelde- und andere Kabel während der Bauphase aufnehmen, so dass sie aus dem Arbeitsbereich von Gleisstopf- oder anderen Baumaschinen gebracht sind, wobei von einem Schienenfuß (2) einer Schiene (1), ausgehend von einer Schienenklemme (3), ein Aufsteckrohr (4) in einer Führung gleitend und in definierter Länge fixierbar mit einer Stützenführung (12) über ein Basisprofil (11) fest verbunden ist und vor der Stützenführung (12) sich paarweise und zueinander beabstandete Spannböcke (9, 16) mit ihnen zugeordneten und gegenüberstehenden Widerlagern (6) befinden, dabei die Spannböcke (9, 16) und die Widerlager (6) mit Auflageprofilen (7) in Verbindung stehen, die am Basisprofil (11) und dem Aufsteckrohr (4) befestigt sind, sowie zwischen den sich auch paarweise nebeneinander stehenden Spannböcken (9, 16) mit den Widerlagern (6), Tragprofile (5) verspannt und auf letztere Kabeltröge (14) verschraubt sind.

2. Mobiles Haltesystem für Kabeltröge nach Anspruch 1, **gekennzeichnet dadurch, dass** der Kabeltrog (14) über Bohrungen in seinem Bodenbereich, die mit Bohrungen in den Tragprofilen (5) korrespondieren mittels eines Spannjochs, oben (15) und eines Spannjochs, unten (13) mit den Tragprofilen (5) verschraubt ist.

3. Mobiles Haltesystem für Kabeltröge nach Anspruch 1, **gekennzeichnet dadurch, dass** die Spannböcke (9, 16) und die zugehörigen Widerlager (6) bündig mit der Auflagefläche der Tragprofile (5) für die / den Kabeltröge / Kabeltrog bezüglich ihrer Höhe abschließen.

4. Mobiles Haltesystem für Kabeltröge nach Anspruch 3, **gekennzeichnet dadurch, dass** die nebeneinander angeordneten Tragprofile (5) auch jeweils in einer Doppellage übereinander vorliegen

5. Mobiles Haltesystem für Kabeltröge nach einem der vorgenannten Ansprüche 1 bis 4, **gekennzeichnet dadurch, dass** die innerhalb der Spannböcke (9,16) aufeinander stoßenden Tragprofile (5) in einer Abknickung zueinander verspannbar sind.
